(19) **Europäisches Patentamt / European Patent Office / Office européen des brevets**

(11) **EP 3 959 142 B1**

(12) **FASCICULE DE BREVET EUROPEEN**

(45) Date de publication et mention de la délivrance du brevet:
**07.06.2023 Bulletin 2023/23**

(21) Numéro de dépôt: **21742459.7**

(22) Date de dépôt: **28.06.2021**

(51) Classification Internationale des Brevets (IPC):
**B64G 1/24** *(2006.01)* **B64G 1/26** *(2006.01)*
**B64G 1/28** *(2006.01)*

(52) Classification Coopérative des Brevets (CPC):
**B64G 1/242; B64G 1/244; B64G 1/26; B64G 1/283**

(86) Numéro de dépôt international:
**PCT/FR2021/051181**

(87) Numéro de publication internationale:
**WO 2022/003284 (06.01.2022 Gazette 2022/01)**

(54) **PROCÉDÉ DE CONTRÔLE D'ORBITE ET DE DÉSATURATION D'UN SATELLITE AU MOYEN DE BRAS ARTICULÉS PORTANT DES UNITÉS DE PROPULSION**

VERFAHREN ZUR UMLAUFBAHNSTEUERUNG UND -DESATURATION EINES SATELLITEN MITTELS GELENKARMEN, DIE EINE ANTRIEBSEINHEIT TRAGEN

METHOD FOR ORBIT CONTROL AND DESATURATION OF A SATELLITE BY MEANS OF ARTICULATED ARMS SUPPORTING PROPULSION UNITS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2020 FR 2006999**

(43) Date de publication de la demande:
**02.03.2022 Bulletin 2022/09**

(73) Titulaire: **Airbus Defence and Space SAS**
**31402 Toulouse Cedex 4 (FR)**

(72) Inventeur: **LAURENS, Philippe**
**31402 TOULOUSE CEDEX 4 (FR)**

(74) Mandataire: **Plasseraud IP**
**66, rue de la Chaussée d'Antin**
**75440 Paris Cedex 09 (FR)**

(56) Documents cités:
**EP-A1- 0 922 635      EP-A1- 2 666 723**
**WO-A1-2015/193499      FR-A1- 2 786 893**
**FR-A1- 3 032 427      US-A1- 2009 020 650**

**Description**

**Domaine technique**

La présente invention appartient au domaine du contrôle d'orbite et d'attitude des satellites. L'invention trouve une application particulièrement avantageuse, bien que nullement limitative, dans le cas de satellites de télécommunications en orbite géostationnaire (« Geostationary Orbit » ou GEO) équipés de moyens de propulsion électriques.

**Etat de la technique**

De manière connue, un satellite en orbite terrestre est soumis à de nombreuses perturbations. Ces perturbations tendent, d'une part, à déplacer le satellite par rapport à une position de consigne sur son orbite et, d'autre part, à modifier l'attitude dudit satellite par rapport à une attitude de consigne.

Afin de maintenir le satellite sensiblement dans la position de consigne et dans l'attitude de consigne, il est nécessaire d'effectuer un contrôle d'orbite et un contrôle d'attitude dudit satellite.

Le contrôle d'orbite consiste à limiter les variations des paramètres orbitaux généralement exprimés en termes d'inclinaison, de longitude et d'excentricité de l'orbite du satellite. Dans le cas d'un satellite en orbite GEO, tel qu'un satellite de télécommunications, le contrôle d'orbite revient à contrôler la position du satellite par rapport à la Terre, et est connu également sous le nom de maintien à poste du satellite (« station keeping » ou « S/K » dans la littérature anglo-saxonne).

Le contrôle d'orbite d'un satellite en orbite GEO est généralement réalisé au moyen de plusieurs manoeuvres de poussée au cours desquelles des propulseurs du satellite sont activés. Le contrôle d'orbite du satellite est effectué en ajustant les forces de poussée formées par lesdits propulseurs au cours des différentes manoeuvres de poussée, mais également en ajustant les durées d'activation desdits propulseurs.

Généralement, les besoins de contrôle d'orbite les plus importants concernent le contrôle de l'inclinaison de l'orbite du satellite, qui est réalisé en effectuant des manoeuvres de poussée, dites manoeuvres Nord/Sud (N/S), de part et d'autre de la Terre, respectivement au voisinage du noeud ascendant et du noeud descendant de l'orbite du satellite. Au voisinage du noeud ascendant, la manoeuvre de poussée forme une force de poussée qui tend à ramener le satellite vers l'hémisphère Sud. Au voisinage du noeud descendant, la manoeuvre de poussée forme une force de poussée qui tend à ramener le satellite vers l'hémisphère Nord.

Le contrôle d'attitude consiste à contrôler l'orientation du satellite, en particulier par rapport à la Terre. Lorsque le satellite est à poste en orbite, les perturbations appliquent des moments (« torques » dans la littérature anglo-saxonne) qui tendent à faire tourner ledit satellite autour de son centre de masse et donc à modifier l'attitude dudit satellite par rapport à l'attitude de consigne (attitude de mission). Il est à noter que les manoeuvres de poussée du contrôle d'orbite peuvent également appliquer des moments perturbateurs lorsque les forces de poussée ne sont pas parfaitement alignées avec le centre de masse du satellite.

Afin de maintenir le satellite dans l'attitude de consigne, celui-ci est généralement équipé d'un dispositif de stockage de moment cinétique (« angular momentum » dans la littérature anglo-saxonne). Le dispositif de stockage de moment cinétique comporte par exemple au moins trois roues de réaction, d'axes de rotation linéairement indépendants. En contrôlant la vitesse de rotation desdites roues de réaction, il est possible de créer des moments qui s'opposent aux moments perturbateurs.

Du fait de l'effet cumulatif des moments perturbateurs, les vitesses de rotation desdites roues de réaction, et donc le moment cinétique stocké, tendent à augmenter progressivement. Il est par conséquent nécessaire de désaturer régulièrement le dispositif de stockage de moment cinétique afin de limiter l'excursion en vitesse desdites roues de réaction. Par « désaturer », on entend appliquer des moments externes sur le satellite qui, lorsqu'ils sont repris par le dispositif de stockage de moment cinétique, permettent de diminuer la quantité de moment cinétique stocké. Une telle désaturation du dispositif de stockage de moment cinétique est connue sous le nom de « angular momentum unloading » dans la littérature anglo-saxonne.

La désaturation du dispositif de stockage de moment cinétique met généralement en oeuvre des propulseurs du satellite, qui sont activés au cours de manoeuvres de poussée de contrôle d'attitude.

Il est connu du document EP 3157815 A1 une solution permettant de limiter à la fois le nombre de propulseurs embarqués par le satellite et le nombre de manoeuvres de poussée, permettant de réaliser à la fois le contrôle d'orbite (inclinaison, longitude, excentricité) et la désaturation 3-axes du dispositif de stockage de moment cinétique du satellite.

Dans le document EP 3157815 A1, le satellite est équipé de deux bras articulés comportant chacun au moins trois degrés de liberté, portant des propulseurs respectifs et étant agencés de part et d'autre d'un corps du satellite, un bras articulé étant agencé du côté Nord du satellite tandis que l'autre bras articulé est agencé du côté Sud du satellite. Dans le document EP 3157815 A1, un plan de manoeuvre est utilisé, comportant au moins deux manoeuvres de poussée exécutées au voisinage respectivement du noeud ascendant et du noeud descendant de l'orbite du satellite. Les forces de poussée de ces deux manoeuvres de poussée sont déterminées pour contrôler l'inclinaison, la longitude et l'excentricité de l'orbite du satellite, et pour former des moments de désaturation du dispositif de stockage. En outre, les forces de poussée sont délibérément non parallèles en repère inertiel, afin de permettre de réaliser sur ces deux manoeuvres de poussée une désaturation 3-axes du dispositif de stockage.

Ainsi, la solution proposée par le document EP 3157815 A1 permet, au moyen de deux bras articulés portant des propulseurs, de contrôler tous les paramètres orbitaux et d'effectuer une désaturation 3-axes du dispositif de stockage, tout en limitant le nombre de manoeuvres de poussée.

Toutefois, dans certains cas, il peut exister un besoin plus important en termes de désaturation 3-axes du dispositif de stockage, qui nécessite dans le cas de la solution proposée par le document EP 3157815 A1 de différencier plus fortement les forces de poussée des manoeuvres de poussée en repère inertiel. Ceci peut être réalisé en écartant davantage l'une au moins des forces de poussée par rapport au noeud ascendant ou descendant de l'orbite. Toutefois, la manoeuvre de poussée est alors moins efficace, en particulier pour contrôler l'inclinaison de l'orbite du satellite, ce qui entraine une surconsommation en ergols pour effectuer le contrôle d'orbite du satellite. Une autre solution consiste à solliciter davantage les articulations des bras articulés pour différencier davantage les forces de poussée des manoeuvres de poussée. Toutefois, une telle sollicitation plus importante des articulations des bras articulé pourrait augmenter la probabilité de panne d'un des bras articulés, notamment dans la deuxième moitié de la durée de la mission du satellite.

**Exposé de l'invention**

La présente invention a pour objectif de remédier à tout ou partie des limitations des solutions de l'art antérieur, notamment celles exposées ci-avant, en proposant une solution qui permette d'augmenter la contrôlabilité du satellite, en particulier pour augmenter la capacité de désaturation, tout en limitant la surconsommation en ergols et les sollicitations des bras articulés.

A cet effet, et selon un premier aspect, il est proposé un procédé de contrôle d'orbite d'un satellite en orbite terrestre et de désaturation d'un dispositif de stockage de moment cinétique dudit satellite, ledit satellite comportant deux bras articulés comportant chacun au moins trois degrés de liberté et portant chacun une unité de propulsion, l'orbite du satellite comportant deux noeuds d'orbite opposés, ledit procédé comportant :

- une détermination d'un plan de manoeuvre pour contrôler l'orbite du satellite et pour désaturer le dispositif de stockage, ledit plan de manoeuvre comportant au moins deux manoeuvres de poussée, une première manoeuvre de poussée étant à exécuter en utilisant l'unité de propulsion de l'un des bras articulés lorsque le satellite est situé du côté de l'un des noeuds d'orbite, une seconde manoeuvre de poussée étant à exécuter en utilisant l'unité de propulsion de l'autre bras articulé lorsque le satellite est situé du côté de l'autre noeud d'orbite,
- une commande des bras articulés et des unités de propulsion en fonction du plan de manoeuvre.

En outre, l'une au moins desdites première et seconde manoeuvres de poussée est une manoeuvre de poussée dite discontinue, ladite manoeuvre de poussée discontinue étant constituée d'au moins deux sous-manoeuvres de poussée disjointes successives.

Comme dans l'art antérieur, l'orbite du satellite et la désaturation du dispositif de stockage de moment cinétique sont donc contrôlées au moyen d'un plan de manoeuvre défini sur une ou plusieurs périodes orbitales. Le plan de manoeuvre comporte une première manoeuvre de poussée qui est exécutée au moyen d'un des bras articulés et de l'unité de propulsion qu'il porte, du côté d'un des noeuds d'orbite (le noeud ascendant ou le noeud descendant), et une seconde manoeuvre de poussée qui est exécutée au moyen de l'autre bras articulé et de l'unité de propulsion qu'il porte, du côté de l'autre noeud d'orbite (le noeud descendant si la première manoeuvre de poussée est exécutée du côté du noeud ascendant, ou inversement).

Afin d'augmenter la contrôlabilité du satellite, et en particulier pour augmenter la capacité de désaturation au cours du plan de manoeuvre, l'une au moins desdites première et seconde manoeuvres de poussée est une manoeuvre de poussée dite discontinue. La manoeuvre de poussée discontinue est constituée d'au moins deux sous-manoeuvres de poussée disjointes successives, c'est-à-dire qu'elles sont séparées par un intervalle temporel d'interruption de poussée de durée non nulle, au cours duquel l'unité de propulsion ne forme plus de force de poussée. Toutes les sous-manoeuvres de poussée d'une même manoeuvre de poussée discontinue sont exécutées au moyen du même bras articulé et de la même unité de propulsion.

Grâce à cette décomposition d'une manoeuvre de poussée en sous-manoeuvres de poussée disjointes successives, la capacité de désaturation 3-axes est améliorée. En effet, plus la durée de l'intervalle temporel d'interruption de poussée est longue, et plus le satellite va se déplacer le long de son orbite. Ainsi, même sans modifier en repère satellite la position et l'orientation de l'unité de propulsion au cours de l'intervalle temporel d'interruption de poussée, la force de poussée formée à la fin d'une sous-manoeuvre de poussée sera différente, en repère inertiel, de celle formée au début de la sous-manoeuvre de poussée suivante, permettant une désaturation 3-axes au cours d'une même manoeuvre de poussée discontinue. Une telle amélioration de la capacité de désaturation 3-axes peut être obtenue sans nécessairement avoir besoin :

- de solliciter davantage le bras articulé puisque la force de poussée est changée en repère inertiel du seul fait du déplacement du satellite pendant l'intervalle temporel d'interruption de poussée,
- d'augmenter fortement la consommation d'ergols : en effet, la durée d'une manoeuvre de poussée peut être allongée au cours du temps par l'introduction d'un intervalle temporel d'interruption de poussée, sans avoir à augmenter la durée effective d'activation de l'unité de propulsion (égale à la durée cumulée des sous-manoeuvres de poussée) ; si les sous-manoeuvres de poussée sont exécutées à proximité du noeud d'orbite, la perte d'efficacité du contrôle d'orbite (et la surconsommation associée) est limitée.

Ainsi, à durée d'activation constante de l'unité de propulsion portée par le bras articulé, la décomposition d'une manoeuvre de poussée en sous-manoeuvres de poussée disjointes successives permet d'étaler ladite manoeuvre de poussée dans le temps, ce qui permet d'introduire une diversité sur la direction de poussée et donc une capacité de désaturation 3-axes à l'échelle de la manoeuvre de poussée discontinue. Une telle capacité de désaturation 3-axes au niveau de la manoeuvre de poussée discontinue peut être considérée seule ou être combinée à une capacité de désaturation 3-axes à l'échelle du plan de manoeuvre, par exemple en considérant des forces de poussée de direction de poussée respectives non parallèles en repère inertiel pour la première manoeuvre de poussée et la seconde manoeuvre de poussée.

Dans des modes particuliers de mise en oeuvre, le procédé de contrôle peut comporter en outre l'une ou plusieurs des caractéristiques suivantes, prises isolément ou selon toutes les combinaisons techniquement possibles.

Dans des modes particuliers de mise en oeuvre, la manoeuvre de poussée discontinue comporte au moins une sous-manoeuvre de poussée dite amont à exécuter en amont dudit noeud d'orbite et une sous-manoeuvre de poussée dite aval à exécuter en aval dudit noeud d'orbite. De telles dispositions permettent d'améliorer l'efficacité du contrôle d'orbite, car au moins deux sous-manoeuvres de poussée peuvent être exécutées à proximité du noeud d'orbite de la manoeuvre de poussée discontinue.

Dans des modes particuliers de mise en oeuvre, les au moins deux sous-manoeuvres de poussée de la manoeuvre de poussée discontinue sont exécutées lorsque le satellite est situé dans une plage angulaire d'au plus 60° centrée sur le noeud d'orbite de la manoeuvre de poussée discontinue. De telles dispositions permettent d'améliorer l'efficacité du contrôle d'orbite, car aucune sous-manoeuvre de poussée n'est exécutée dans une position du satellite trop éloignée du noeud d'orbite.

Dans des modes particuliers de mise en oeuvre, l'autre desdites première et seconde manoeuvres de poussée du plan de manoeuvre est une manoeuvre de poussée continue, et la durée cumulée des sous-manoeuvres de poussée de la manoeuvre de poussée discontinue est inférieure à 1.5 fois la durée de ladite manoeuvre de poussée continue. En effet, tel qu'indiqué précédemment, la durée effective d'activation de l'unité de propulsion au cours de la manoeuvre de poussée discontinue ne doit pas nécessairement être augmentée. Ainsi, la durée cumulée des sous-manoeuvres de poussée d'une manoeuvre de poussée discontinue peut être du même ordre de grandeur que la durée d'une manoeuvre de poussée continue, éventuellement légèrement supérieure pour compenser une perte d'efficacité du contrôle d'orbite.

Dans des modes particuliers de mise en oeuvre, en repère satellite, la direction de poussée de la force de poussée appliquée par l'unité de propulsion à la fin d'une sous-manoeuvre de poussée est sensiblement identique à la direction de poussée de la force de poussée appliquée par ladite unité de propulsion au début de la sous-manoeuvre de poussée suivante. En effet, le déplacement du satellite au cours de l'intervalle temporel d'interruption de poussée introduit de manière inhérente une diversité sur la direction de poussée, de sorte qu'il n'est pas nécessaire de solliciter le bras articulé pour modifier la position et l'orientation de l'unité de propulsion.

Dans des modes particuliers de mise en oeuvre, le bras articulé utilisé pour exécuter la manoeuvre de poussée discontinue comportant au moins trois articulations comportant chacune au moins un degré de liberté en rotation autour d'un axe de rotation, les positions angulaires respectives desdites au moins trois articulations ne sont pas modifiées entre deux sous-manoeuvres de poussée successives d'une même manoeuvre de poussée discontinue ou, si une position angulaire est modifiée, celle-ci est modifiée d'au plus 2°.

Dans des modes particuliers de mise en oeuvre, le procédé de contrôle comporte un mode de contrôle dit à poussée continue utilisant un plan de manoeuvre dépourvu de manoeuvre de poussée discontinue, et un mode de contrôle dit à poussée discontinue utilisant un plan de manoeuvre comportant au moins une manoeuvre de poussée discontinue, le mode de contrôle à poussée discontinue étant utilisé lorsqu'un critère prédéterminé de contrôle à poussée discontinue est vérifié.

Dans des modes particuliers de mise en oeuvre, le critère de contrôle à poussée discontinue dépend d'un besoin en termes de désaturation du dispositif de stockage.

# EP 3 959 142 B1

En effet, étant donné qu'une manoeuvre de poussée discontinue permet d'augmenter la capacité de désaturation 3-axes, il est avantageux d'utiliser le mode de contrôle à poussée discontinue lorsque le besoin en termes de désaturation, en particulier de désaturation 3-axes, est important.

Dans des modes particuliers de mise en oeuvre, le critère de contrôle à poussée discontinue est vérifié lorsque le besoin en termes de désaturation, en particulier de désaturation 3-axes, est tel qu'un plan de manoeuvre dépourvu de poussée discontinue entrainerait une surconsommation en ergols supérieure à une valeur seuil prédéterminée par rapport à un plan de manoeuvre à poussée discontinue.

Dans des modes particuliers de mise en oeuvre, le plan de manoeuvre comporte au moins une manoeuvre de poussée par période orbitale.

Dans des modes particuliers de mise en oeuvre, la première manoeuvre de poussée et la seconde manoeuvre de poussée ont des forces de poussée initiales des unités de propulsion de directions de poussée respectives non parallèles en repère inertiel, lesdites forces de poussée étant déterminées pour former des moments dans des plans respectifs non parallèles en repère inertiel et réaliser une désaturation 3-axes dudit dispositif de stockage de moment cinétique. De préférence, les forces de poussée initiales des sous-manoeuvres de poussée sont de directions de poussée non parallèles entre elles en repère inertiel, et non parallèles avec une direction de poussée d'une force de poussée de l'autre manoeuvre de poussée.

Dans des modes particuliers de mise en oeuvre, la première manoeuvre de poussée et la seconde manoeuvre de poussée ont des forces de poussée des unités de propulsion déterminées pour contrôler au moins l'inclinaison de l'orbite du satellite.

Dans des modes particuliers de mise en oeuvre, la première manoeuvre de poussée et la seconde manoeuvre de poussée ont des forces de poussée des unités de propulsion déterminées pour contrôler en outre au moins un paramètre orbital parmi la longitude et l'excentricité de l'orbite du satellite.

Selon un second aspect, il est proposé un satellite destiné à être placé en orbite terrestre, comportant un dispositif de stockage de moment cinétique et deux bras articulés comportant chacun au moins trois degrés de liberté et portant chacun une unité de propulsion. En outre, le satellite comporte des moyens configurés pour mettre en oeuvre un procédé de contrôle d'orbite et de désaturation selon l'un quelconque des modes de mise en oeuvre de l'invention.

Selon un troisième aspect, il est proposé un système satellitaire comportant une station terrestre et un satellite en orbite terrestre, ledit satellite comportant deux bras articulés comportant chacun au moins trois degrés de liberté et portant chacun une unité de propulsion. En outre, le système satellitaire comporte des moyens configurés pour mettre en oeuvre un procédé de contrôle d'orbite et de désaturation selon l'un quelconque des modes de mise en oeuvre de l'invention.

Dans des modes particuliers de réalisation, le système satellitaire peut comporter en outre l'une ou plusieurs des caractéristiques suivantes, prises isolément ou selon toutes les combinaisons techniquement possibles.

Dans des modes particuliers de réalisation, chaque bras articulé comporte au moins trois articulations comportant chacune au moins un degré de liberté en rotation autour d'un axe de rotation, une première articulation et une seconde articulation étant séparées par une première liaison et étant d'axes de rotation respectifs non parallèles, la seconde articulation et une troisième articulation étant séparées par une seconde liaison et étant d'axes de rotation respectifs non parallèles.

Dans des modes particuliers de réalisation, les unités de propulsion comportent uniquement des propulseurs électriques.

Dans des modes particuliers de réalisation, le satellite comporte uniquement des propulseurs électriques.

Dans des modes particuliers de réalisation, le satellite est en orbite géostationnaire.

## Présentation des figures

L'invention sera mieux comprise à la lecture de la description suivante, donnée à titre d'exemple nullement limitatif, et faite en se référant aux figures qui représentent :

- Figure 1 : une représentation schématique d'un satellite en orbite autour de la Terre,
- Figure 2 : une représentation schématique d'un exemple de réalisation d'un satellite,
- Figure 3 : un diagramme illustrant les principales étapes d'un mode de mise en oeuvre d'un procédé de contrôle d'orbite et de désaturation,
- Figure 4 : un diagramme illustrant les principales étapes d'une variante de mise en oeuvre du procédé de contrôle d'orbite et de désaturation,
- Figure 5 : une représentation schématique d'un premier exemple de plan de manoeuvre,
- Figure 6 : une représentation schématique d'un second exemple de plan de manoeuvre,
- Figure 7 : une représentation schématique d'un troisième exemple de plan de manoeuvre,
- Figure 8 : une représentation schématique d'un quatrième exemple de plan de manoeuvre,

- Figure 9 : une représentation schématique d'un mode préféré de mise en oeuvre d'un plan de manoeuvre.

Dans ces figures, des références identiques d'une figure à une autre désignent des éléments identiques ou analogues. Pour des raisons de clarté, les éléments représentés ne sont pas à l'échelle, sauf mention contraire.

**Description des modes de réalisation**

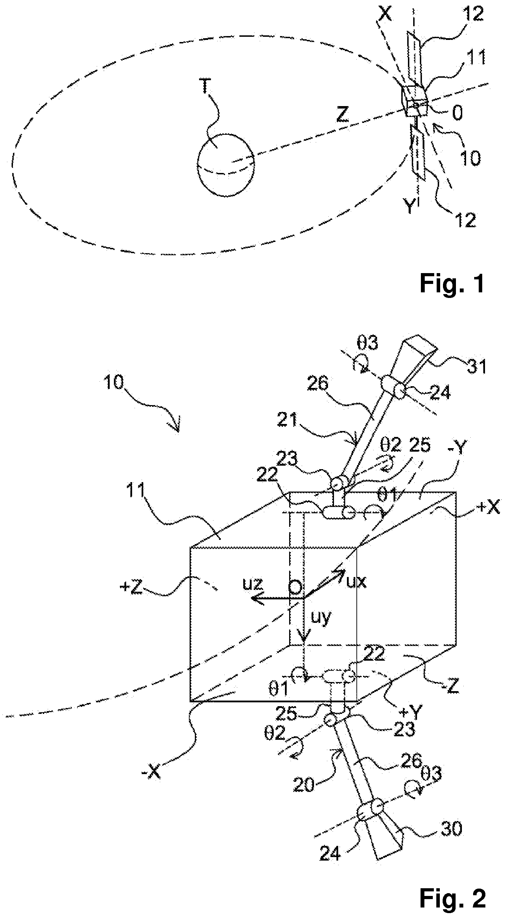

La figure 1 représente schématiquement un satellite 10 en orbite autour de la Terre T.

Dans la suite de la description, on se place de manière non limitative dans le cas d'un satellite 10 en orbite GEO. Rien n'exclut cependant, suivant d'autres exemples, de considérer d'autres types d'orbites terrestres, par exemple des orbites géosynchrones, des orbites moyennes (« Médium Earth Orbit » ou MEO), des orbites basses (« Low Earth Orbit » ou LEO), etc.

Pour les besoins de la description, on associe au satellite 10 un repère satellite centré sur un centre de masse O du satellite 10 et comportant trois axes X, Y, Z. Plus particulièrement, l'axe X est parallèle à un vecteur vitesse du satellite 10 en repère inertiel, l'axe Z est dirigé vers le centre de la Terre T, et l'axe Y est orthogonal aux axes X et Z. On associe à chacun des axes X, Y et Z du repère satellite des vecteurs unitaires respectivement ux, uy et uz. Le vecteur unitaire ux correspond au vecteur vitesse normalisé par la norme dudit vecteur vitesse, le vecteur unitaire uz est orienté du centre de masse O du satellite 10 vers le centre de la Terre T, et le vecteur unitaire uy est orienté de telle sorte que l'ensemble (ux, uy, uz) constitue une base orthonormée directe du repère satellite.

Tel qu'illustré par la figure 1, le satellite 10 comporte par exemple un corps 11, et deux générateurs solaires 12 de part et d'autre du corps 11. Les deux générateurs solaires 12 sont par exemple montés mobiles en rotation par rapport au corps 11 du satellite 10, autour d'un même axe de rotation.

Dans la suite de la description, on se place de manière non limitative dans le cas où le corps 11 du satellite 10 est sensiblement en forme de parallélépipède rectangle. Le corps 11 comporte ainsi six faces deux à deux parallèles, et les deux générateurs solaires 12 sont agencés respectivement sur deux faces opposées dudit corps 11, l'axe de rotation desdits deux générateurs solaires 12 étant sensiblement orthogonal auxdites deux faces opposées du corps 11 du satellite 10.

Dans la suite de la description, on se place dans le cas où l'attitude du satellite 10 est contrôlée, pour les besoins de la mission dudit satellite 10, de sorte à être placé dans une attitude de consigne, dite « attitude de mission ». Par exemple, l'attitude de mission est telle que :

- une face du corps 11 du satellite 10, désignée par «face +Z », portant par exemple un instrument d'une charge utile dudit satellite 10, est dirigée vers la Terre et est sensiblement orthogonale à l'axe Z ; la face opposée à la face +Z, agencée alors du côté opposé à la Terre, est désignée par « face -Z » ;
- les deux faces opposées du corps 11 du satellite 10 sur lesquelles sont agencés les deux générateurs solaires 12, désignées par respectivement « face +Y » (par rapport au centre de masse O : du côté pointé par le vecteur unitaire uy) et « face -Y », sont sensiblement orthogonales à l'axe Y ;
- les deux dernières faces opposées du corps 11 du satellite 10, désignées par respectivement « face +X » (par rapport au centre de masse O : du côté pointé par le vecteur unitaire ux) et « face -X », sont sensiblement orthogonales à l'axe X.

En outre, le satellite 10 étant dans l'exemple considéré en orbite GEO, le plan d'orbite du satellite 10, qui correspond au plan équatorial, est confondu avec le plan (X, Z) lorsque ledit satellite 10 est dans son attitude de mission. La face -Y se trouve du côté de l'hémisphère Nord et est également désignée par « face Nord », et la face +Y se trouve du côté de l'hémisphère Sud et est également désignée par « face Sud ».

Le satellite 10 comporte également un ensemble d'actionneurs adaptés à contrôler l'orbite et l'attitude dudit satellite 10, ainsi qu'un dispositif de commande (non représenté sur les figures) desdits actionneurs, également embarqué dans ledit satellite 10.

Pour les besoins du contrôle d'attitude, le satellite 10 comporte en particulier un dispositif de stockage de moment cinétique (non représenté sur les figures) adapté à stocker un moment cinétique d'axe quelconque, c'est-à-dire ayant une capacité de stockage de moment cinétique suivant trois axes linéairement indépendants. Le dispositif de stockage de moment cinétique comporte un ensemble d'actionneurs inertiels tels que des roues de réaction et/ou des actionneurs gyroscopiques. Par exemple, le dispositif de stockage de moment cinétique comporte au moins trois roues de réaction d'axes de rotation respectifs linéairement indépendants.

Tel qu'indiqué précédemment, le contrôle d'orbite consiste à contrôler au moins un paramètre orbital parmi l'inclinaison, la longitude et l'excentricité de l'orbite du satellite 10. Dans le cas d'un satellite 10 en orbite GEO, il est connu que les besoins en termes de contrôle d'orbite, par exemple exprimés en termes de variation de vitesse requise par an (m/s/an), sont principalement imposés par le contrôle de l'inclinaison de l'orbite du satellite 10 (contrôle Nord/Sud ou N/S). L'ordre de grandeur de la variation de vitesse requise par an pour le contrôle N/S, suivant l'axe Y, est ainsi de 50 m/s/an, tandis qu'il est de 2-4 m/s/an pour le contrôle de la longitude de l'orbite (contrôle Est/Ouest ou E/O), suivant l'axe X.

Dans la présente invention, le satellite 10 comporte, pour les besoins du contrôle d'orbite et de désaturation du dispositif de stockage de moment cinétique, au moins deux bras articulés comportant chacun au moins trois degrés de liberté, et portant chacun une unité de propulsion. Les deux bras articulés sont adaptés à déplacer les unités de propulsion dans des volumes de débattement respectifs différents en repère satellite. Grâce à ses au moins trois degrés de liberté, chaque bras articulé permet de modifier en repère satellite à la fois la direction de poussée et le point d'application d'une force de poussée formée par l'unité de propulsion portée par ce bras articulé.

Chaque unité de propulsion comporte au moins un propulseur. Dans des modes préférés de réalisation, chaque unité de propulsion comporte au moins deux propulseurs, afin par exemple de pallier une défaillance d'un des propulseurs et/ou afin de répartir leur utilisation en alternance sur la durée de la mission du satellite 10.

La figure 2 représente schématiquement un mode particulier de réalisation d'un satellite 10 comportant deux bras articulés 20, 21, Chaque bras articulé 20, 21 comporte une première extrémité liée au corps 11 du satellite 10, et une seconde extrémité portant une unité de propulsion 30, 31.

De préférence, les unités de propulsion 30, 31 comportent uniquement des propulseurs électriques (électrothermique, électrostatique, plasma, etc.). Rien n'exclut cependant, suivant d'autres exemples, que l'une ou les deux unités de propulsion 30, 31 comportent des propulseurs chimiques (gaz froid, ergols liquides, etc.).

De manière générale, chacun des deux bras articulés 20, 21 comporte au moins trois degrés de liberté, et lesdits deux bras articulés 20, 21 sont adaptés à déplacer les unités de propulsion 30, 31 dans des volumes de débattement respectifs différents. Par exemple, et tel qu'illustré par la figure 2, les volumes de débattement respectifs des bras articulés 20, 21 sont inclus dans des demi-espaces respectifs opposés par rapport au plan d'orbite du satellite 10. Tel qu'indiqué ci-dessus, le plan d'orbite, qui correspond au plan équatorial, correspond au plan (X, Z) lorsque le satellite 10 se trouve dans l'attitude de mission. Les volumes de débattement respectifs des bras articulés 20 et 21 sont inclus, dans l'exemple illustré par la figure 2 :

- dans le demi-espace délimité par le plan (X, Z) du côté de la face Sud (+Y) pour le bras articulé 20,
- dans le demi-espace délimité par le plan (X, Z) du côté de la face Nord (-Y) pour le bras articulé 21.

De manière générale, dans toute la présente demande, une force de poussée est définie par un vecteur de poussée et un point d'application de ladite force de poussée par rapport au centre de masse O du satellite 10. Le vecteur de poussée est lui-même défini par une norme de poussée et par une direction de poussée de norme unitaire, qui correspond au vecteur de poussée normalisé par ladite norme de poussée. On comprend donc que les bras articulés 20, 21 permettent de modifier en repère satellite à la fois les directions de poussée et les points d'application des forces de poussée formées par les unités de propulsion 30, 31.

Dans l'exemple illustré par la figure 2, la première extrémité du bras articulé 20 se trouve sur la face Sud, tandis que la première extrémité du bras articulé 21 se trouve sur la face Nord du corps 11 du satellite 10. Dans cet exemple, les premières extrémités des bras articulés 20, 21 sont liées au corps 11 du satellite 10 en des points respectifs qui sont décalés vers la face -Z par rapport aux projections orthogonales du centre de masse théorique sur les faces Sud et Nord. Une telle configuration des bras articulés 20, 21, liés au corps 11 du satellite 10 en des points décalés vers la face -Z par rapport aux projections orthogonales du centre de masse théorique, permet de faciliter le contrôle de l'excentricité de l'orbite du satellite 10. En effet, la force de poussée de l'unité de propulsion 30 (respectivement unité de propulsion 31), lorsqu'elle est appliquée en un point d'application tel qu'aucun moment n'est formé, comporte alors une composante non nulle suivant l'axe Z.

D'autres positions sont cependant possibles pour les premières extrémités des bras articulés 20, 21. Suivant un autre exemple non limitatif, les premières extrémités des bras articulés 20, 21 peuvent être positionnées toutes deux sur la face -Z du satellite, à proximité de la face Sud pour le bras articulé 20 et à proximité de la face Nord pour le bras articulé 21.

Dans l'exemple illustré par la figure 2, chaque bras articulé 20, 21 comporte trois articulations 22, 23, 24, chaque articulation comportant au moins un degré de liberté en rotation autour d'un axe de rotation. Les articulations 22 et 23 sont reliées entre elles et séparées par une liaison 25, tandis que les articulations 23 et 24 sont reliées entre elles et séparées par une liaison 26. En outre, pour chaque bras articulé 20, 21, les axes de rotation respectifs d'articulations 22, 23, 24 adjacentes ne sont pas parallèles pour chacune des deux paires d'articulations adjacentes. Ainsi, les axes de rotation des articulations 22 et 23 ne sont pas parallèles entre eux, et les axes de rotation des articulations 23 et 24 ne sont pas parallèles entre eux.

Pour contrôler la direction de poussée et le point d'application de la force de poussée, le dispositif de commande contrôle les positions angulaires des articulations 22, 23, 24, désignées respectivement par $\Theta 1$, $\Theta 2$ et $\Theta 3$.

De tels bras articulés 20, 21 à trois degrés de liberté permettent de contrôler tous les paramètres orbitaux de l'orbite du satellite 10 et de désaturer suivant 3-axes le dispositif de stockage de moment cinétique, sans qu'il soit nécessaire d'équiper le satellite 10 d'autres propulseurs que ceux des unités de propulsion 30, 31 pour effectuer le contrôle d'orbite et la désaturation. De tels bras articulés 20, 21 peuvent également être mis en oeuvre pour réaliser la mise à poste du satellite 10 sur son orbite de mission, en orientant les unités de propulsion 30, 31 de sorte à former des forces de poussée ayant des composantes importantes suivant l'axe Z.

Le contrôle d'orbite du satellite 10 et la désaturation du dispositif de stockage de moment cinétique sont réalisés, au niveau du dispositif de commande, en commandant les bras articulés 20, 21, et les unités de propulsion 30, 31 portées par les bras articulés, selon un plan de manoeuvre comportant au moins deux manoeuvres de poussée. Au cours de chaque manoeuvre de poussée, l'unité de propulsion 30, 31 d'un bras articulé 20, 21 est activée pour former une force de poussée.

Le dispositif de commande comporte par exemple au moins un processeur et au moins une mémoire électronique dans laquelle est mémorisé un produit programme d'ordinateur, sous la forme d'un ensemble d'instructions de code de programme à exécuter pour commander les bras articulés 20, 21 et les unités de propulsion 30, 31 selon le plan de manoeuvre. Dans une variante, le dispositif de commande comporte un ou des circuits logiques programmables, de type FPGA, PLD, etc., et/ou circuits intégrés spécialisés (ASIC) adaptés à mettre en oeuvre tout ou partie desdites étapes de commande des bras articulés 20, 21 et des unités de propulsion 30, 31 selon le plan de manoeuvre. En d'autres termes, le dispositif de commande comporte un ensemble de moyens configurés de façon logicielle (produit programme d'ordinateur spécifique) et/ou matérielle (FPGA, PLD, ASIC, etc.) pour commander les bras articulés 20, 21 et les unités de propulsion 30, 31 qu'ils portent selon le plan de manoeuvre.

De manière générale, le plan de manoeuvre, qui peut être défini sur une ou plusieurs périodes orbitales, comporte au moins deux manoeuvres de poussée, à savoir une première manoeuvre de poussée et une seconde manoeuvre de poussée.

La première manoeuvre et la seconde manoeuvre de poussée sont exécutées lorsque le satellite 10 est situé au voisinage de noeuds d'orbite respectifs différents. De manière connue, les noeuds d'orbite consistent en un noeud ascendant et un noeud descendant. En pratique, le noeud ascendant correspond au point de l'orbite où le satellite 10 passe de l'hémisphère Sud vers l'hémisphère Nord, et le noeud descendant correspond au point de l'orbite où le satellite 10 passe de l'hémisphère Nord vers l'hémisphère Sud.

Par exemple, la première manoeuvre de poussée est exécutée lorsque le satellite 10 se trouve du côté du noeud ascendant de l'orbite, c'est-à-dire dans une plage angulaire d'au plus 180° centrée sur le noeud ascendant, et la seconde manoeuvre de poussée est exécutée lorsque le satellite 10 se trouve du côté du noeud descendant de l'orbite, c'est-à-dire dans une plage angulaire d'au plus 180° centrée sur le noeud descendant.

Dans le cas de la configuration de bras articulés 20, 21 représentée sur la figure 2, la première manoeuvre de poussée utilise uniquement le bras articulé 21 (et l'unité de propulsion 31) parmi les bras articulés 20, 21, tandis que la seconde manoeuvre de poussée utilise uniquement le bras articulé 20 (et l'unité de propulsion 30) parmi les bras articulés 20, 21. En effet, le bras articulé 20 peut former des forces de poussée qui poussent le satellite 10 vers le Nord, qui sont utiles au niveau du noeud descendant. A contrario, le bras articulé 21 peut former des forces de poussée qui poussent le satellite 10 vers le Sud, qui sont utiles au niveau du noeud ascendant.

En outre, le plan de manoeuvre est tel que l'une au moins des desdites première et seconde manoeuvres de poussée est une manoeuvre de poussée dite discontinue. La manoeuvre de poussée discontinue est constituée d'au moins deux sous-manoeuvres de poussée disjointes successives, c'est-à-dire qu'elles sont séparées par un intervalle temporel d'interruption de poussée de durée non nulle, au cours duquel l'unité de propulsion ne forme plus de force de poussée. Bien que discontinue, il s'agit bien d'une même manoeuvre de poussée dans la mesure où :

- c'est le même bras articulé 20, 21 et la même unité de propulsion 30, 31 qui sont utilisés pendant toutes les sous-manoeuvres de poussée de la manoeuvre de poussée discontinue, et
- les sous-manoeuvres de poussée de la manoeuvre de poussée discontinue sont toutes exécutées à proximité du noeud d'orbite de la manoeuvre de poussée discontinue, avant que le satellite 10 n'atteigne la plage angulaire d'au plus 180° centrée sur l'autre noeud d'orbite ; en d'autres termes, toutes les sous-manoeuvres de poussée d'une même manoeuvre de poussée discontinue sont exécutées au cours d'une même demi-période orbitale.

Etant donné qu'une manoeuvre de poussée discontinue vise à découper une manoeuvre de poussée continue en sous-manoeuvres de poussée successives disjointes, les déplacements du bras articulé 20, 21 utilisé au cours de la manoeuvre de poussée discontinue sont de préférence faibles voire nuls en repère satellite au cours de l'intervalle temporel d'interruption de poussée. Ainsi, en repère satellite, la direction de poussée de la force de poussée appliquée par l'unité de propulsion 30, 31 à la fin d'une sous-manoeuvre de poussée est de préférence sensiblement identique à la direction de poussée de la force de poussée appliquée par ladite unité de propulsion 30, 31 au début de la sous-manoeuvre de poussée qui la suit immédiatement. Par sensiblement identique, on entend que l'expression ci-dessous est vérifiée :

[Math. 1]

$$\frac{F_1'\left(T_{1,f}'\right) \cdot F_1''\left(T_{1,d}''\right)}{\left\|F_1'\left(T_{1,f}'\right)\right\|\left\|F_1''\left(T_{1,d}''\right)\right\|} > 0.9$$

expression dans laquelle :

- $F_1'\left(T_{1,f}'\right)$ correspond au vecteur de poussée $F_1'$ de la force de poussée à la fin d'une première sous-manoeuvre de poussée qui s'achève à une date $T_{1,f}'$, exprimé dans le repère satellite,

- $\left\|F_1'\left(T_{1,f}'\right)\right\|$ correspond à la norme de poussée du vecteur de poussée $F_1'\left(T_{1,f}'\right)$, de sorte que $F_1'\left(T_{1,f}'\right)/\left\|F_1'\left(T_{1,f}'\right)\right\|$ correspond à la direction de poussée du vecteur poussée $F_1'\left(T_{1,f}'\right)$,

- $F_1''\left(T_{1,d}''\right)$ correspond au vecteur de poussée $F_1''$ de la force de poussée au début d'une seconde sous-manoeuvre de poussée qui débute à une date $T_{1,d}''$, exprimé dans le repère satellite,

- $\left\|F_1''\left(T_{1,d}''\right)\right\|$ correspond à la norme de poussée du vecteur de poussée $F_1''\left(T_{1,d}''\right)$, de sorte que $F_1''\left(T_{1,d}''\right)/\left\|F_1''\left(T_{1,d}''\right)\right\|$ correspond à la direction de poussée du vecteur poussée $F_1''\left(T_{1,d}''\right)$,

- a · b correspond au produit scalaire entre les vecteurs a et b.

En d'autres termes, le produit scalaire, entre la direction de poussée de la force de poussée appliquée par l'unité de propulsion 30, 31 à la fin d'une sous-manoeuvre de poussée et la direction de poussée de la force de poussée appliquée par ladite unité de propulsion 30, 31 au début de la sous-manoeuvre de poussée qui la suit immédiatement, est supérieur à 0.9. De préférence, ledit produit scalaire est supérieur à 0.95.

Par exemple, il est possible de ne pas modifier les positions angulaires Θ1, Θ2 et Θ3 des articulations 22, 23, 24 du bras articulé 20, 21 utilisé lors de la manoeuvre de poussée discontinue entre deux sous-manoeuvres de poussée successives d'une même manoeuvre de poussée discontinue. A défaut, seules de faibles modifications peuvent être autorisées, par exemple des modifications de moins de 1° ou 2° de chacune des positions angulaires Θ1, Θ2 et Θ3, afin de ne pas trop solliciter le bras articulé 20, 21.

Le but de l'intervalle temporel d'interruption de poussée est notamment d'étaler la manoeuvre de poussée discontinue dans le temps (et le long de l'orbite) sans avoir à augmenter la durée d'activation de l'unité de propulsion 30, 31 utilisée lors de la manoeuvre de poussée discontinue. Par conséquent, dans des modes préférés de mise en oeuvre, la durée cumulée des sous-manoeuvres de poussée de la manoeuvre discontinue est de préférence du même ordre de grandeur que la durée d'une manoeuvre de poussée continue. Par exemple, si le plan de manoeuvre comporte également une manoeuvre de poussée continue, la durée cumulée des sous-manoeuvres de poussée de la manoeuvre de poussée discontinue (c'est-à-dire la durée de la manoeuvre de poussée discontinue moins la durée de l'intervalle temporel d'interruption de poussée) est de préférence inférieure à 1.5 fois la durée de ladite manoeuvre de poussée continue, voire inférieure à 1.2 fois la durée de celle-ci. De préférence, la durée maximale possible de chaque sous-manoeuvre de poussée d'une manoeuvre de poussée discontinue est strictement inférieure à la durée minimale possible d'une manoeuvre de poussée continue.

De manière générale, les principaux paramètres à ajuster du plan de manoeuvre sont par exemple :

- les dates de début des différentes manoeuvres de poussée, c'est-à-dire les dates d'activation de l'unité de propulsion 30, 31,
- les durées d'activation des différentes manoeuvres de poussée, c'est-à-dire les durées d'activation de l'unité de propulsion 30, 31,
- pour chaque manoeuvre de poussée discontinue, la durée et la date de début de chaque intervalle temporel d'interruption de poussée de l'unité de propulsion 30, 31,
- les directions de poussée et les points d'application par rapport au centre de masse O du satellite 10 des forces de poussée respectives des différentes manoeuvres de poussée.

Dans la suite de la description, on se place de manière non limitative dans le cas où la direction de poussée et le point d'application de chaque force de poussée du plan de manoeuvre sont fixes en repère satellite pendant toute la durée de la manoeuvre de poussée correspondante. En d'autres termes, les valeurs des positions angulaires Θ1, Θ2 et Θ3 des articulations 22, 23, 24 du bras articulé 21 ne sont pas modifiées au cours d'une même manoeuvre de poussée (et ne sont pas modifiées entre deux sous-manoeuvres de poussée d'une même manoeuvre de poussée discontinue). Rien n'exclut cependant, suivant d'autres exemples, de faire varier lesdites valeurs des positions angulaires Θ1, Θ2 et Θ3, afin d'augmenter le nombre de degrés de liberté pour le contrôle d'orbite et la désaturation.

Il est également possible d'ajuster d'autres paramètres tels que les normes de poussée des forces de poussée respectives desdites différentes manoeuvres de poussée (dans le cas d'une unité de propulsion 30, 31 dont la norme de poussée peut être contrôlée).

Dans la suite de la description, on considère que le plan de manoeuvre comporte exactement deux manoeuvres de poussée, soit exactement une première manoeuvre de poussée et une seconde manoeuvre de poussée. En outre, on considère de manière non limitative que c'est la première manoeuvre de poussée qui est discontinue, et qu'elle comporte exactement deux sous-manoeuvres de poussée de même durée. Rien n'exclut cependant, suivant d'autres exemples, de considérer des sous-manoeuvres de poussée de durées différentes. On désigne par :

- $\Delta T_1$ la durée d'activation de l'unité de propulsion 30, 31 lors de la première manoeuvre de poussée (de sorte que chaque sous-manoeuvre de poussée a une durée $\Delta T_1/2$ dans l'exemple considéré),

- $T'_{1,d}$ est la date de début de la première manoeuvre de poussée,

- $\Delta T_{IP}$ est la durée de l'intervalle temporel d'interruption de poussée, de sorte que la seconde sous-manoeuvre de poussée débute à la date $T''_{1,d} = T'_{1,d} + \Delta T_1/2 + \Delta T_{IP}$ ,

- $\theta 1(T'_{1,d})$, $\theta 2(T'_{1,d})$ et $\theta 3(T'_{1,d})$ les positions angulaires des articulations 22, 23, 24 à la date de début $T'_{1,d}$ (identiques à celles de la date de début $T''_{1,d}$ dans l'exemple considéré),

- $T_2$ est la date de début de la seconde manoeuvre de poussée,

- $\Delta T_2$ la durée d'activation de l'unité de propulsion 30, 31 lors de la seconde manoeuvre de poussée,

- $\theta 1(T_2)$, $\theta 2(T_2)$ et $\theta 3(T_2)$ les positions angulaires des articulations 22, 23, 24 à la date de début $T_2$.

Si l'on se place dans le cas où le plan de manoeuvre vise à contrôler tous les paramètres orbitaux (inclinaison, longitude, excentricité) de l'orbite du satellite 10 et à désaturer suivant 3 axes le dispositif de stockage de moment cinétique dudit satellite 10, alors le système d'équations à résoudre comporte neuf équations, relatives aux paramètres suivants :

- $\Delta Vx(T'_{1,d})$ et $\Delta Vx(T_2)$, des paramètres scalaires qui correspondent aux besoins en termes de variation de vitesse requise suivant l'axe X (contrôle E/O), aux cours de la première manoeuvre de poussée et de la seconde manoeuvre de poussée,

- $\Delta Vy(T'_{1,d})$ et $\Delta Vy(T_2)$, des paramètres scalaires qui correspondent aux besoins en termes de variation de vitesse requise suivant l'axe Y (contrôle N/S), aux cours de la première manoeuvre de poussée et de la seconde manoeuvre de poussée,

- $\Delta Vz(T'_{1,d})$ et $\Delta Vz(T_2)$, des paramètres scalaires qui correspondent aux besoins en termes de variation de vitesse requise suivant l'axe Z (contrôle excentricité), aux cours de la première manoeuvre de poussée et de la seconde manoeuvre de poussée,

- $\Delta H$, un vecteur de trois paramètres scalaires correspondant aux composantes du moment cinétique à déstocker du dispositif de stockage de moment cinétique à l'issue de la première manoeuvre de poussée et de la seconde manoeuvre de poussée, exprimé en repère inertiel.

En ajustant les durées $\Delta T_1$ et $\Delta T_2$ et les dates de début $T'_{1,d}$ et $T_2$ desdites deux manoeuvres de poussée, et les valeurs des positions angulaires $\theta 1(T'_{1,d})$, $\theta 2(T'_{1,d})$, $\theta 3(T'_{1,d})$ , $\theta 1(T_2)$, $\theta 2(T_2)$ et $\theta 3(T_2)$ des articulations 22, 23, 24 des bras articulés 20, 21 au cours desdites deux manoeuvres de poussée, on dispose alors d'un nombre suffisant de degrés de liberté pour résoudre le système d'équations susmentionné. Du fait que la première manoeuvre de poussée est une manoeuvre de poussée discontinue, on dispose en outre d'un degré de liberté $\Delta T_{IP}$ supplémentaire pour améliorer de contrôle et pour augmenter la capacité de désaturation 3-axes.

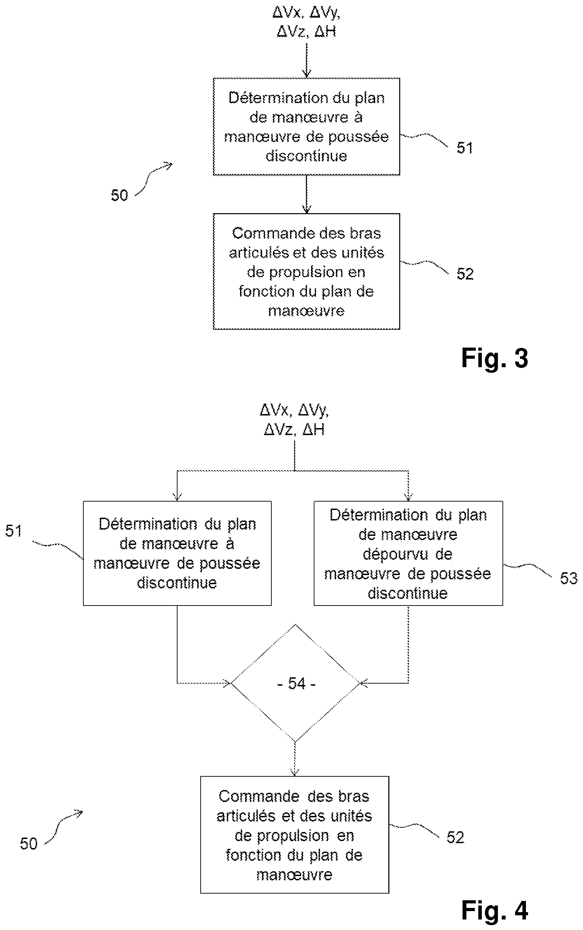

La figure 3 représente schématiquement les principales étapes d'un procédé 50 de contrôle de l'orbite du satellite 10 et de désaturation d'un dispositif de stockage de moment cinétique dudit satellite.

Tel qu'illustré par la figure 3, le procédé 50 de contrôle d'orbite et de désaturation comporte notamment une étape 51 de détermination d'un plan de manoeuvre tel que décrit ci-dessus, comportant au moins une manoeuvre de poussée discontinue, défini sur une ou plusieurs périodes orbitales.

Les manoeuvres de poussée du plan de manoeuvre sont déterminées en fonction de besoins prédéterminés de contrôle d'inclinaison ($\Delta$Vy), de contrôle de longitude ($\Delta$Vx) et de contrôle d'excentricité ($\Delta$Vz) de l'orbite du satellite 10, et en fonction d'un besoin prédéterminé de désaturation ($\Delta$H) du dispositif de stockage de moment cinétique dudit satellite 10.

Dans des modes particuliers de mise en oeuvre, les forces de poussée initiales respectives de la première manoeuvre de poussée et de la seconde manoeuvre de poussée (aux dates de début $T'_{1,d}$ et $T_2$) sont de préférence de directions de poussée non parallèles en repère inertiel. Ainsi, lesdites forces de poussée initiales permettent de former des moments de désaturation dans des plans respectifs non parallèles entre eux de sorte que, sur l'ensemble desdites première et seconde manoeuvres de poussée, l'espace vectoriel dans lequel il est possible de former un moment de désaturation est de dimension trois. Ainsi, outre la capacité de désaturation 3-axes obtenue au sein de la manoeuvre de poussée discontinue, une capacité de désaturation 3-axes supplémentaire est obtenue sur l'ensemble desdites première et seconde manoeuvres de poussée. De préférence, les forces de poussée initiales des sous-manoeuvres de poussée sont toutes de directions de poussée non parallèles entre elles en repère inertiel, et non parallèles avec la direction de poussée de la force de poussée initiale de l'autre manoeuvre de poussée.

Une fois que le plan de manoeuvre est déterminé, le procédé 50 de contrôle d'orbite et de désaturation comporte une étape 52 de commande des bras articulés 20, 21, et des unités de propulsion 30, 31 portées par lesdits bras articulés, en fonction du plan de manoeuvre.

Tel qu'indiqué précédemment, l'étape 52 de commande est mise en oeuvre par le dispositif de commande embarqué dans le satellite 10.

L'étape 51 de détermination du plan de manoeuvre peut être exécutée au niveau du satellite 10 par le dispositif de commande embarqué dans ledit satellite 10, ou au sol par une station terrestre d'un système satellitaire. Dans le cas où le plan de manoeuvre est déterminé par une station terrestre, ledit plan de manoeuvre est transmis au satellite 10 pour être mis en oeuvre par le dispositif de commande. Le plan de manoeuvre peut également, suivant d'autres exemples, être déterminé conjointement par le satellite 10 et la station terrestre.

La station terrestre comporte par exemple au moins un processeur et au moins une mémoire électronique dans laquelle est mémorisé un produit programme d'ordinateur, sous la forme d'un ensemble d'instructions de code de programme à exécuter pour déterminer le plan de manoeuvre. Dans une variante, la station terrestre comporte un ou des circuits logiques programmables, de type FPGA, PLD, etc., et/ou circuits intégrés spécialisés (ASIC) adaptés à déterminer le plan de manoeuvre. En d'autres termes, la station terrestre comporte un ensemble de moyens configurés de façon logicielle (produit programme d'ordinateur spécifique) et/ou matérielle (FPGA, PLD, ASIC, etc.) pour mettre en oeuvre les différentes opérations permettant de déterminer le plan de manoeuvre.

La figure 4 représente schématiquement les principales étapes d'un mode préféré de mise en oeuvre du procédé 50 de contrôle de l'orbite du satellite 10 et de désaturation d'un dispositif de stockage de moment cinétique dudit satellite. Dans l'exemple illustré par la figure 4, le procédé 50 de contrôle et de désaturation comporte un mode de contrôle dit à poussée continue utilisant un plan de manoeuvre dépourvu de manoeuvre de poussée discontinue, et un mode de contrôle dit à poussée discontinue utilisant un plan de manoeuvre comportant au moins une manoeuvre de poussée discontinue. Outre les étapes décrites en référence à la figure 3, le procédé 50 de contrôle et de désaturation comporte une étape 53 de détermination d'un plan de manoeuvre dépourvu de manoeuvre de poussée discontinue. Dans l'exemple illustré par la figure 4, l'étape 53 de détermination de plan de manoeuvre dépourvu de manoeuvre de poussée discontinue est exécutée en parallèle de l'étape 51 de détermination de plan de manoeuvre à poussée discontinue. Ainsi, un plan de manoeuvre dépourvu de manoeuvre de poussée discontinue et un plan de manoeuvre à poussée discontinue sont déterminés. Dans l'exemple illustré par la figure 4, le procédé 50 de contrôle et de désaturation comporte ensuite une étape 54 d'évaluation d'un critère prédéterminé de contrôle à poussée discontinue. Lorsque le critère de contrôle à poussée discontinue est vérifié, le plan de manoeuvre à poussée discontinue est utilisé au cours de l'étape 52 de commande. Lorsque le critère de contrôle à poussée discontinue n'est pas vérifié, le plan de manoeuvre dépourvu de manoeuvre de poussée discontinue est utilisé au cours de l'étape 52 de commande.

Par exemple, le critère de contrôle à poussée discontinue peut être considéré comme vérifié lorsque :

- la désaturation du dispositif de stockage obtenue avec le plan de manoeuvre dépourvu de manoeuvre de poussée discontinue est considérée comme insuffisante, par exemple à durée d'activation constante de l'unité de propulsion 30, 31, et/ou

- le besoin en termes de désaturation, en particulier de désaturation 3-axes, est tel que le plan de manoeuvre dépourvu de poussée discontinue entraine une surconsommation en ergols trop importante (par exemple supérieure à une valeur seuil prédéterminée) par rapport au plan de manoeuvre à poussée discontinue, et/ou
- les dates de début et les durées des manoeuvres de poussée du plan de manoeuvre à poussée discontinue sont davantage compatibles avec les contraintes de l'opérateur du satellite 10 que celles du plan de manoeuvre dépourvu de manoeuvre de poussée discontinue, etc.

Cependant, d'autres exemples de critère de contrôle à poussée discontinue sont envisageables. En outre, d'autres variantes du mode particulier de mise en oeuvre illustré par la figure 4 sont envisageables. Par exemple, une variante possible consiste à exécuter d'abord l'étape 53 de détermination du plan de manoeuvre dépourvu de manoeuvre de poussée discontinue, puis d'exécuter directement l'étape 54 d'évaluation du critère de contrôle à poussée discontinue. Dans un tel cas, l'étape 51 de détermination du plan de manoeuvre à poussée discontinue est exécutée uniquement lorsque le critère de contrôle à poussée discontinue est vérifié.

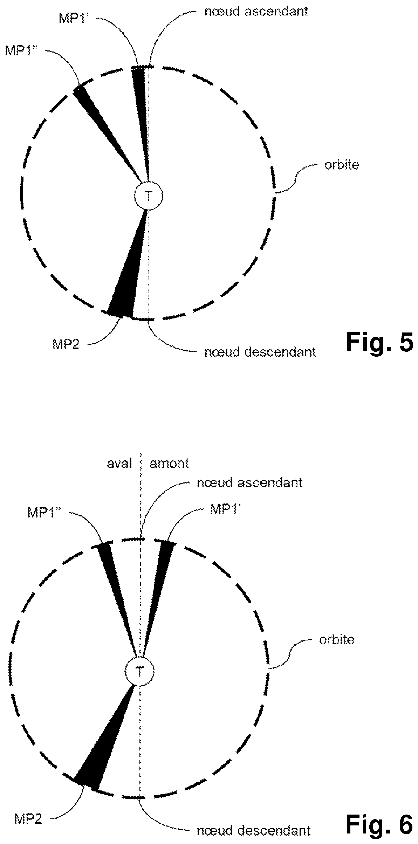

Les figures 5 à 8 représentent schématiquement des exemples de plans de manoeuvre à poussée discontinue. Les figures 5 à 8 représentent l'orbite du satellite 10, autour de la Terre T, ainsi que les noeud d'orbite (noeuds ascendant et descendant, opposés par rapport à la Terre T). Les plans de manoeuvre représentés sur les figures 5 à 8 sont tous définis sur une seule période orbitale. Rien n'exclut cependant d'avoir un plan de manoeuvre défini sur plusieurs périodes orbitales. En outre, les plans de manoeuvre représentés sur les figures 5 à 8 comportent une première manoeuvre de poussée exécutée au voisinage du noeud ascendant et une seconde manoeuvre de poussée exécutée au voisinage du noeud descendant.

La figure 5 représente schématiquement un exemple de plan de manoeuvre à poussée discontinue dans lequel la première manoeuvre de poussée est une manoeuvre de poussée discontinue constituée de deux sous-manoeuvres de poussée MP1' et MP1", et la seconde manoeuvre de poussée MP2 est une manoeuvre de poussée continue.

Dans l'exemple illustré par la figure 5 les sous-manoeuvres de poussée MP1' et MP1" sont toutes exécutés d'un même côté du noeud d'orbite (noeud ascendant), en l'occurrence en aval du noeud d'orbite par rapport au sens de déplacement du satellite 10 sur l'orbite.

Dans des modes préférés de mise en oeuvre, et tel qu'illustré par la figure 6, les sous-manoeuvres de poussée MP1' et MP1" sont exécutées de part et d'autre du noeud d'orbite. La sous-manoeuvre de poussée MP1' est exécutée en amont du noeud d'orbite et la sous-manoeuvre de poussée MP1" est exécutée en aval dudit noeud d'orbite. De telles dispositions permettent d'améliorer l'efficacité du contrôle d'orbite, car les deux sous-manoeuvres de poussée MP1' et MP1" peuvent être rapprochées du noeud d'orbite.

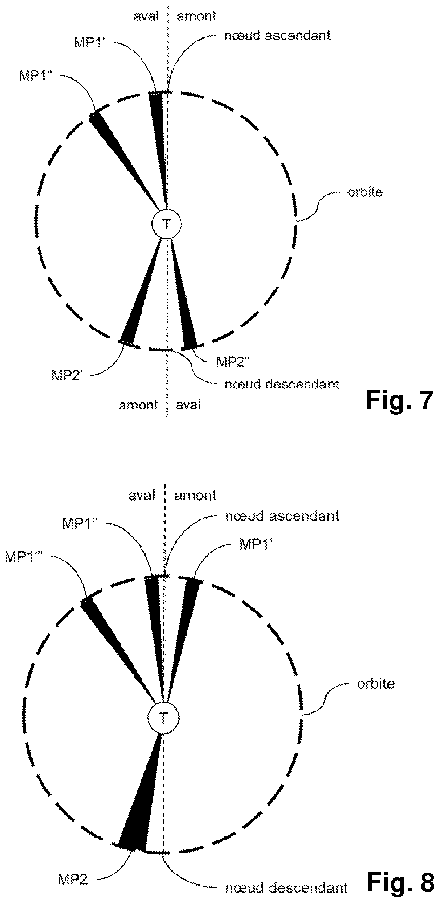

La figure 7 représente schématiquement un exemple de plan de manoeuvre à poussée discontinue dans lequel la première manoeuvre de poussée est une manoeuvre de poussée discontinue constituée de deux sous-manoeuvres de poussée MP1' et MP1", et la seconde manoeuvre de poussée est également une manoeuvre de poussée discontinue constituée de deux sous-manoeuvres de poussée MP2' et MP2". En effet, le nombre de manoeuvres de poussée discontinues peut varier d'un plan de manoeuvre à un autre, ou même d'une période orbitale à une autre, en fonction des besoins de contrôle d'orbite et de désaturation. Augmenter le nombre de manoeuvres de poussée discontinues permet notamment d'augmenter la capacité de désaturation 3-axes du plan de manoeuvre.

La figure 8 représente schématiquement un exemple de plan de manoeuvre à poussée discontinue dans lequel la première manoeuvre de poussée est une manoeuvre de poussée discontinue constituée de trois sous-manoeuvres de poussée MP1', MP1" et MP1''', et la seconde manoeuvre de poussée est une manoeuvre de poussée continue MP2. En effet, le nombre de sous-manoeuvres de poussée d'une manoeuvre de poussée discontinu peut également être supérieur à deux, par exemple pour augmenter davantage la capacité de désaturation 3-axes de la manoeuvre de poussée discontinue.

Il est à noter que les exemples représentés par les figures 5 à 8 ne sont pas limitatifs, et d'autres plans de manoeuvre sont envisageables. De préférence, lorsque le plan de manoeuvre est défini sur plusieurs périodes orbitales, celui-ci comporte au moins une manoeuvre de poussée par période orbitale. Il est à noter que le nombre de manoeuvres de poussée par période orbitale peut varier d'une période orbitale à une autre. Par exemple, le plan de manoeuvre peut comporter une manoeuvre de poussée au cours d'une première période orbitale, puis deux manoeuvres de poussée au cours d'une seconde période orbitale, etc. De manière générale, un plan de manoeuvre à poussée discontinue doit comporter au moins une manoeuvre de poussée discontinue, et il est possible d'avoir un plan de manoeuvre comportant uniquement des manoeuvres de poussée discontinues. Si le plan de manoeuvre est défini sur plusieurs périodes orbitales, il est envisageable d'avoir certaines périodes orbitales au cours desquelles aucune manoeuvre de poussée discontinue n'est exécutée. Toutefois, un plan de manoeuvre à poussée discontinue défini sur plusieurs périodes orbitales comporte de préférence au moins une manoeuvre de poussée discontinue par période orbitale.

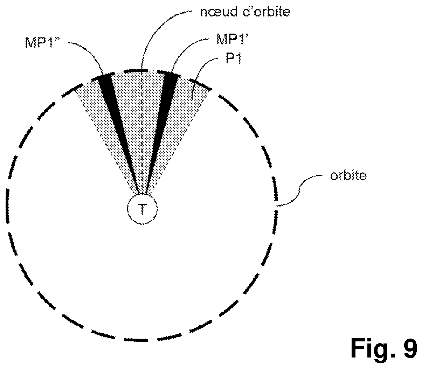

La figure 9 représente schématiquement un mode préféré de mise en oeuvre d'un plan de manoeuvre à poussée discontinue. Dans ce mode de mise en oeuvre, les sous-manoeuvres de poussée d'une manoeuvre de poussée discontinue sont exécutées lorsque le satellite 10 est situé dans une plage angulaire P1 qui est de préférence d'au plus 60°, centrée sur le noeud d'orbite (ascendant ou descendant) de la manoeuvre de poussée discontinue. Ainsi, chaque sous-manoeuvre de poussée débute et s'achève pendant que le satellite 10 se trouve dans la plage angulaire P1, tel qu'illustré par la figure 9 avec deux sous-manoeuvres de poussée MP1' et MP1 ". De telles dispositions permettent d'améliorer l'efficacité du contrôle d'orbite, car aucune sous-manoeuvre de poussée n'est exécutée dans une position du satellite 10 trop éloignée du noeud d'orbite. De manière encore plus préférentielle, les sous-manoeuvres de poussée de la manoeuvre de poussée discontinue sont exécutées lorsque le satellite 10 est situé dans une plage angulaire d'au plus 50° centrée sur le noeud d'orbite.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant principalement un satellite 10 comportant deux bras articulés 20, 21 comportant chacun trois articulations. Rien n'exclut cependant, suivant d'autres exemples, de considérer un satellite 10 comportant un nombre de bras articulés supérieur à deux, et/ou comportant un nombre d'articulations et/ou de degrés de liberté supérieur à trois.

## Revendications

1. Procédé (50) de contrôle d'orbite d'un satellite (10) en orbite terrestre et de désaturation d'un dispositif de stockage de moment cinétique dudit satellite, ledit satellite (10) comportant deux bras articulés (20, 21) comportant chacun au moins trois degrés de liberté et portant chacun une unité de propulsion (30, 31), l'orbite du satellite (10) comportant deux noeuds d'orbite opposés, ledit procédé (50) comportant :

   - une détermination (51) d'un plan de manoeuvre pour contrôler l'orbite du satellite (10) et pour désaturer le dispositif de stockage, ledit plan de manoeuvre comportant au moins deux manoeuvres de poussée, une première manoeuvre de poussée étant à exécuter en utilisant l'unité de propulsion (30, 31) de l'un des bras articulés (20, 21) lorsque le satellite (10) est situé du côté d'un des noeuds d'orbite, une seconde manoeuvre de poussée étant à exécuter en utilisant l'unité de propulsion (31, 30) de l'autre bras articulé (21, 20) lorsque le satellite (10) est situé du côté de l'autre noeud d'orbite,
   - une commande (52) des bras articulés (20, 21) et des unités de propulsion (30, 31) en fonction du plan de manoeuvre,

   **caractérisé en ce que** l'une au moins desdites première et seconde manoeuvres de poussée est une manoeuvre de poussée dite discontinue, ladite manoeuvre de poussée discontinue étant constituée d'au moins deux sous-manoeuvres de poussée disjointes successives.

2. Procédé (50) selon la revendication 1, dans lequel la manoeuvre de poussée discontinue comporte au moins une sous-manoeuvre de poussée dite amont à exécuter en amont dudit noeud d'orbite et une sous-manoeuvre de poussée dite aval à exécuter en aval dudit noeud d'orbite.

3. Procédé (50) selon la revendication 1 ou 2, dans lequel, en repère satellite, la direction de poussée de la force de poussée appliquée par l'unité de propulsion (30, 31) à la fin d'une sous-manoeuvre de poussée est sensiblement identique à la direction de poussée de la force de poussée appliquée par ladite unité de propulsion au début de la sous-manoeuvre de poussée suivante.

4. Procédé (50) selon l'une quelconque des revendications précédentes, dans lequel, le bras articulé (20, 21) utilisé pour exécuter la manoeuvre de poussée discontinue comportant au moins trois articulations (22, 23, 24) comportant chacune au moins un degré de liberté en rotation autour d'un axe de rotation, les positions angulaires respectives desdites au moins trois articulations ne sont pas modifiées entre deux sous-manoeuvres de poussée successives d'une même manoeuvre de poussée discontinue.

5. Procédé (50) selon l'une quelconque des revendications précédentes, comportant un mode de contrôle dit à poussée continue utilisant un plan de manoeuvre dépourvu de manoeuvre de poussée discontinue, et un mode de contrôle dit à poussée discontinue utilisant un plan de manoeuvre comportant au moins une manoeuvre de poussée discontinue, le mode de contrôle à poussée discontinue étant utilisé lorsqu'un critère prédéterminé de contrôle à poussée discontinue est vérifié.

6. Procédé (50) selon la revendication 5, dans lequel le critère de contrôle à poussée discontinue dépend d'un besoin en termes de désaturation du dispositif de stockage.

**7.** Procédé (50) selon la revendication 6, dans lequel le critère de contrôle à poussée discontinue est vérifié lorsque le besoin en termes de désaturation est tel qu'un plan de manoeuvre dépourvu de poussée discontinue entrainerait une surconsommation en ergols supérieure à une valeur seuil prédéterminée par rapport à un plan de manoeuvre à poussée discontinue.

**8.** Procédé (50) selon l'une quelconque des revendications précédentes, dans lequel la première manoeuvre de poussée et la seconde manoeuvre de poussée ont des forces de poussée initiales des unités de propulsion (30, 31) de directions de poussée respectives non parallèles en repère inertiel, lesdites forces de poussée étant déterminées pour former des moments dans des plans respectifs non parallèles en repère inertiel et réaliser une désaturation 3-axes dudit dispositif de stockage de moment cinétique.

**9.** Procédé (50) selon l'une quelconque des revendications précédentes, dans lequel la première manoeuvre de poussée et la seconde manoeuvre de poussée ont des forces de poussée des unités de propulsion (30, 31) déterminées pour contrôler au moins l'inclinaison de l'orbite du satellite (10).

**10.** Satellite (10) destiné à être placé en orbite terrestre, comportant un dispositif de stockage de moment cinétique et deux bras articulés (20, 21) comportant chacun au moins trois degrés de liberté et portant chacun une unité de propulsion (30, 31), **caractérisé en ce que** ledit satellite comporte un dispositif de commande configuré pour commander les bras articulés (20, 21) et les unités de propulsion (30, 31) portées par lesdits bras articulés selon un plan de manoeuvre d'un procédé (50) de contrôle d'orbite et de désaturation selon l'une quelconque des revendications précédentes.

**11.** Satellite (10) selon la revendication 10, dans lequel chaque bras articulé (20, 21) comporte au moins trois articulations (22, 23, 24) comportant chacune au moins un degré de liberté en rotation autour d'un axe de rotation, une première articulation (22) et une seconde articulation (23) étant séparées par une première liaison (25) et étant d'axes de rotation respectifs non parallèles, la seconde articulation (23) et une troisième articulation (24) étant séparées par une seconde liaison (26) et étant d'axes de rotation respectifs non parallèles.

**12.** Satellite (10) selon la revendication 10 ou 11, comportant uniquement des propulseurs électriques.

**13.** Système satellitaire comportant une station terrestre et un satellite (10) en orbite terrestre selon l'une quelconque des revendications 10 à 12, dans lequel le plan de manoeuvre est déterminé par le dispositif de commande et/ou par la station terrestre.

**14.** Système satellitaire selon la revendication 13, dans lequel le satellite (10) est en orbite géostationnaire.

**Patentansprüche**

**1.** Verfahren (50) zur Steuerung der Umlaufbahn eines Satelliten (10) in der Erdumlaufbahn und zur Entsättigung einer Vorrichtung zur Speicherung des kinetischen Moments des Satelliten, wobei der Satellit (10) zwei Gelenkarme (20, 21) umfasst, die jeweils wenigstens drei Freiheitsgrade aufweisen und jeweils eine Antriebseinheit (30, 31) tragen, wobei die Umlaufbahn des Satelliten (10) zwei entgegengesetzte Umlaufbahnknoten umfasst, wobei das Verfahren (50) umfasst:

- eine Bestimmung (51) eines Manöverplans zum Steuern der Umlaufbahn des Satelliten (10) und zum Entsättigen der Speichervorrichtung, wobei der Manöverplan wenigstens zwei Schubmanöver umfasst, wobei ein erstes Schubmanöver unter Verwendung der Antriebseinheit (30, 31) eines der Gelenkarme (20, 21), ausgeführt wird, wenn sich der Satellit (10) auf der Seite eines der Umlaufbahnknoten befindet, und ein zweites Schubmanöver unter Verwendung der Antriebseinheit (31, 30) des anderen Gelenkarms (21, 20) ausgeführt wird, wenn sich der Satellit (10) auf der Seite des anderen Umlaufbahnknotens befindet,
- Steuerung (52) der Gelenkarme (20, 21) und der Antriebseinheiten (30, 31) entsprechend dem Manöverplan,

**dadurch gekennzeichnet, dass** wenigstens eines der ersten und zweiten Schubmanöver ein sogenanntes diskontinuierliches Schubmanöver ist, wobei das diskontinuierliche Schubmanöver aus wenigstens zwei aufeinanderfolgenden getrennten Schubuntermanövern besteht.

**2.** Verfahren (50) nach Anspruch 1, wobei das diskontinuierliche Schubmanöver wenigstens ein sogenanntes stromaufwärtiges Schubuntermanöver, das stromaufwärts des Umlaufbahnknotens auszuführen ist, und ein sogenanntes stromabwärtiges Schubuntermanöver, das stromabwärts des Umlaufbahnknotens auszuführen ist, umfasst.

3. Verfahren (50) nach Anspruch 1 oder 2, wobei in Satellitenansicht die Schubrichtung der von der Antriebseinheit (30, 31) am Ende eines Schubuntermanövers angewendeten Schubkraft im Wesentlichen identisch mit der Schubrichtung der von der Antriebseinheit am Anfang des nächsten Schubuntermanövers angewendeten Schubkraft ist.

4. Verfahren (50) nach einem der vorhergehenden Ansprüche, wobei der Gelenkarm (20, 21), der zur Durchführung des diskontinuierlichen Schubmanövers verwendet wird, wenigstens drei Gelenke (22, 23, 24) mit jeweils wenigstens einem Grad an Drehfreiheit um eine Drehachse aufweist, wobei die jeweiligen Winkelpositionen der wenigstens drei Gelenke zwischen zwei aufeinanderfolgenden Schubuntermanövern desselben diskontinuierlichen Schubmanövers nicht verändert werden.

5. Verfahren (50) nach einem der vorhergehenden Ansprüche, welches einen Steuerungsmodus mit kontinuierlichem Schub umfasst, der einen Manöverplan ohne diskontinuierliches Schubmanöver verwendet, und einen Steuerungsmodus mit diskontinuierlichem Schub, der einen Manöverplan mit wenigstens einem diskontinuierlichen Schubmanöver verwendet, wobei der Steuerungsmodus mit diskontinuierlichem Schub verwendet wird, wenn ein vorbestimmtes Kriterium für die diskontinuierliche Schubsteuerung überprüft wird.

6. Verfahren (50) nach Anspruch 5, wobei das Kriterium der diskontinuierlichen Schubsteuerung von einem Bedarf an Entsättigung der Speichervorrichtung abhängt.

7. Verfahren (50) nach Anspruch 6, wobei das Kriterium der diskontinuierlichen Schubsteuerung überprüft wird, wenn der Bedarf an Entsättigung derart ist, dass ein Manöverplan ohne diskontinuierlichen Schub zu einem Mehrverbrauch an Treibstoffen über einem vorbestimmten Schwellenwert im Vergleich zu einem Manöverplan mit diskontinuierlichem Schub führen würde.

8. Verfahren (50) nach einem der vorhergehenden Ansprüche, wobei das erste Schubmanöver und das zweite Schubmanöver Anfangsschubkräfte der Antriebseinheiten (30, 31) mit jeweiligen Schubrichtungen aufweisen, die im Trägheitsbezugssystem nicht parallel sind, wobei die Schubkräfte derart bestimmt werden, dass sie Momente in jeweiligen Ebenen bilden, die im Trägheitsbezugssystem nicht parallel sind, und eine 3-Achsen-Entsättigung der Speichervorrichtung mit kinetischem Moment bewirken.

9. Verfahren (50) nach einem der vorhergehenden Ansprüche, wobei das erste Schubmanöver und das zweite Schubmanöver Schubkräfte der Antriebseinheiten (30, 31) aufweisen, die dazu bestimmt sind, wenigstens die Neigung der Umlaufbahn des Satelliten (10) zu steuern.

10. Satellit (10), der in einer Erdumlaufbahn platziert werden soll, umfassend eine Vorrichtung zur Speicherung des kinetischen Moments und zwei Gelenkarme (20, 21), die jeweils wenigstens drei Freiheitsgrade aufweisen und jeweils eine Antriebseinheit (30, 31) tragen, **dadurch gekennzeichnet, dass** der Satellit eine Steuerungsvorrichtung umfasst, die dazu konfiguriert ist, die Gelenkarme (20, 21) und die von den Gelenkarmen getragenen Antriebseinheiten (30, 31) gemäß einem Manöverplan eines Steuerungsverfahrens für Umlaufbahn und Entsättigung (50) nach einem der vorhergehenden Ansprüche zu steuern.

11. Satellit (10) nach Anspruch 10, wobei jeder Gelenkarm (20, 21) wenigstens drei Gelenke (22, 23, 24) aufweist, die jeweils wenigstens einen Grad an Drehfreiheit um eine Drehachse aufweisen, wobei ein erstes Gelenk (22) und ein zweites Gelenk (23) durch eine erste Verbindung (25) getrennt sind und jeweils nicht-parallele Drehachsen aufweisen, wobei das zweite Gelenk (23) und ein drittes Gelenk (24) durch eine zweite Verbindung (26) getrennt sind und jeweils nicht-parallele Drehachsen aufweisen.

12. Satellit (10) nach Anspruch 10 oder 11, der nur elektrische Triebwerke umfasst.

13. Satellitensystem, umfassend eine Bodenstation und einen Satelliten (10) in der Erdumlaufbahn nach einem der Ansprüche 10 bis 12, wobei der Manöverplan von der Steuerungsvorrichtung und/oder von der Bodenstation bestimmt wird.

14. Satellitensystem nach Anspruch 13, wobei sich der Satellit (10) in einer geostationären Umlaufbahn befindet.

**Claims**

1. Method (50) for orbit control of a satellite (10) in orbit around the Earth and for desaturation of an angular momentum storage device of said satellite, said satellite (10) comprising two articulated arms (20, 21) each having at least three degrees of freedom and each supporting a propulsion unit (30, 31), the orbit of the satellite (10) comprising two opposite orbital nodes, said method (50) comprising:

   - determining (51) a maneuver plan for controlling the orbit of the satellite (10) and for desaturating the storage device, said maneuver plan comprising at least two thrust maneuvers, a first thrust maneuver to be executed using the propulsion unit (30, 31) of one of the articulated arms (20, 21) when the satellite (10) is located near one of the orbital nodes, a second thrust maneuver to be executed using the propulsion unit (31, 30) of the other articulated arm (21, 20) when the satellite (10) is located near the other orbital node,
   - controlling (52) the articulated arms (20, 21) and the propulsion units (30, 31) according to the maneuver plan,

   **characterized in that** at least one of said first and second thrust maneuvers is a thrust maneuver referred to as discontinuous, said discontinuous thrust maneuver being composed of at least two separate consecutive thrust sub-maneuvers.

2. Method (50) according to claim 1, wherein the discontinuous thrust maneuver comprises at least a thrust sub-maneuver referred to as upstream, to be executed upstream of said orbital node, and a thrust sub-maneuver referred to as downstream, to be executed downstream of said orbital node.

3. Method (50) according to claim 1 or 2, wherein, in a satellite's frame of reference, the thrust direction of the thrust force applied by the propulsion unit (30, 31) at the end of a thrust sub-maneuver is substantially identical to the thrust direction of the thrust force applied by said propulsion unit at the start of the next thrust sub-maneuver.

4. Method (50) according to any one of the preceding claims, wherein, the articulated arm (20, 21) used to execute the discontinuous thrust maneuver comprising at least three joints (22, 23, 24) each having at least one degree of freedom in rotation about an axis of rotation, the respective angular positions of said at least three joints are not modified between two consecutive thrust sub-maneuvers of a same discontinuous thrust maneuver.

5. Method (50) according to any one of the preceding claims, comprising a thrust control mode referred to as continuous which uses a maneuver plan comprising no discontinuous thrust maneuver, and a thrust control mode referred to as discontinuous which uses a maneuver plan comprising at least one discontinuous thrust maneuver, the discontinuous thrust control mode being used when a predetermined discontinuous thrust control criterion is satisfied.

6. Method (50) according to claim 5, wherein the discontinuous thrust control criterion is dependent on a requirement in terms of desaturation of the storage device.

7. Method (50) according to claim 6, wherein the discontinuous thrust control criterion is satisfied when the requirement in terms of desaturation is such that a maneuver plan comprising no discontinuous thrust would lead to excess fuel consumption exceeding a predetermined threshold value, in comparison to a maneuver plan comprising a discontinuous thrust.

8. Method (50) according to any one of the preceding claims, wherein the first thrust maneuver and the second thrust maneuver have initial thrust forces of the propulsion units (30, 31) that are in respective non-parallel thrust directions in an inertial frame of reference, said thrust forces being determined so as to create torques in respective non-parallel planes in the inertial frame of reference and to carry out three-axis desaturation of said angular momentum storage device.

9. Method (50) according to any one of the preceding claims, wherein the first thrust maneuver and the second thrust maneuver have thrust forces of the propulsion units (30, 31) that are determined so as to control at least the inclination of the orbit of the satellite (10).

10. Satellite (10) intended to be placed in orbit around the Earth, comprising an angular momentum storage device and two articulated arms (20, 21) each having at least three degrees of freedom and each supporting a propulsion unit (30, 31), **characterized in that** said satellite comprises a control device configured to control the articulated arms (20, 21) and the propulsion units (30, 31) supported by said articulated arms according to a maneuver plan of a

# EP 3 959 142 B1

method (50) for orbit control and desaturation according to any one of the preceding claims.

11. Satellite (10) according to claim 10, wherein each articulated arm (20, 21) comprises at least three joints (22, 23, 24) each having at least one degree of freedom in rotation about an axis of rotation, a first joint (22) and a second joint (23) being separated by a first connecting member (25) and having non-parallel respective axes of rotation, the second joint (23) and a third joint (24) being separated by a second connecting member (26) and having non-parallel respective axes of rotation.

12. Satellite (10) according to claim 10 or 11, comprising only electric thrusters.

13. Satellite system comprising a ground station and a satellite (10) in orbit around the Earth according to any one of claims 10 to 12, wherein the maneuver plan is determined by the control device and/or by the ground station.

14. Satellite system according to claim 13, wherein the satellite (10) is in geostationary orbit.

**Fig. 1**

**Fig. 2**

ΔVx, ΔVy,
ΔVz, ΔH

Détermination du plan
de manœuvre à
manœuvre de poussée
discontinue     51

Commande des bras
articulés et des unités
de propulsion en
fonction du plan de
manœuvre     52

50

**Fig. 3**

ΔVx, ΔVy,
ΔVz, ΔH

51     Détermination du plan
de manœuvre à
manœuvre de poussée
discontinue

Détermination du plan
de manœuvre
dépourvu de
manœuvre de poussée
discontinue     53

- 54 -

Commande des bras
articulés et des unités
de propulsion en
fonction du plan de
manœuvre     52

50

**Fig. 4**

MP1'
nœud ascendant
MP1"
orbite
T
MP2
nœud descendant
**Fig. 5**

aval | amont
nœud ascendant
MP1"
MP1'
orbite
T
MP2
nœud descendant
**Fig. 6**

Fig. 7

Fig. 8

Fig. 9

**EP 3 959 142 B1**

**RÉFÉRENCES CITÉES DANS LA DESCRIPTION**

**Documents brevets cités dans la description**

- EP 3157815 A1